(19)

Europäisches Patentamt

European Patent Office

Office européen des brevets

(11)  **EP 2 738 593 A2**

(12)  # EUROPEAN PATENT APPLICATION

(43) Date of publication:
**04.06.2014   Bulletin 2014/23**

(51) Int Cl.:
**G02C 7/06** (2006.01)

(21) Application number: **13194196.5**

(22) Date of filing: **25.11.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **28.11.2012   JP 2012259444**

(71) Applicant: **HOYA LENS MANUFACTURING
PHILIPPINES INC.
Cavite (PH)**

(72) Inventors:
• **Shinohara, Toshihide
  Nagano 3928502 (JP)**
• **Kaga, Tadashi
  Nagano 3928502 (JP)**

(74) Representative: **Betten & Resch
Theatinerstrasse 8
80333 München (DE)**

(54)  **Progressive power lens and design method for the progressive power lens**

(57)     Provided is a progressive power lens including a far vision part; and a near vision part; wherein an average power of a far vision measurement reference point is minus, the progressive power lens further including: an object side surface including a first surface element; and an eyeball side surface including a second surface element which cancels the first surface element, the first surface element including: an element of a toric surface or an element of an atoric surface by which a horizontal surface power is larger than a vertical surface power at a fitting point positioned at a lower end of the far vision part; and in the far vision part , an element by which the vertical surface power in a first coordinate of a principal sight line passing through the fitting point, is smaller than the vertical surface power in a second coordinate of the principal sight line whose distance from the fitting point is larger than a distance between the first coordinate and the fitting point.

FIG.1

**Description**

BACKGROUND

Technical field

The present invention relates to a progressive power lens and a design method for the progressive power lens.

Description of Related Art

Patent document 1 discloses a progressive power lens with reduced swinging of an image viewed through a lens. Patent document 1 also discloses a progressive power lens for a spectacle including a far vision part and a near vision part having different powers, wherein the following conditions are satisfied by a horizontal surface power OHPf and a vertical surface power OVPf in the far vision part, and a surface power OHPn and a vertical surface power OVPn in the near vision part, on an object side surface along a principal sight line or a vertical reference line passing through a fitting point.

$$OHPf > OVPf$$

$$OHPf + OHPn > OVPf + OVPn$$

$$OVPn > OVPf$$

Patent document 1

Japanese Patent Laid Open Publication No.2012-173595
Although the swinging is improved by the progressive power les described in patent document 1, further improvement of the characteristic such as an aspect ratio of an image has been requested.
According to an aspect of the present invention, there is provided a progressive power lens including:

a far vision part; and
a near vision part;
wherein an average power of a far vision measurement reference point is minus,
the progressive power lens further including:

an object side surface including a first surface element; and
an eyeball side surface including a second surface element which cancels the first surface element,

the first surface element including:

an element of a toric surface or an element of an atoric surface by which a horizontal surface power is larger than a vertical surface power at a fitting point positioned at a lower end of the far vision part; and
an element by which the vertical surface power in a first coordinate of a principal sight line passing through the fitting point, is smaller than the vertical surface power in a second coordinate of the principal sight line whose distance from the fitting point is larger than a distance between the first coordinate and the fitting point.

According to the progressive power lens, the swinging of the image viewed through the lens can be improved by including the element of the toric surface or the element of the atoric surface having a larger horizontal power than the vertical surface power at the fitting point. Further, the element is included by which the vertical surface power in the first coordinate of the principal sight line passing through the fitting point, is smaller than the vertical surface power in the second coordinate of the principal sight line whose distance from the fitting point is larger than the distance between the first coordinate and the fitting point. Therefore, variation of the aspect ratio (ratio of a vertical image magnification to a horizontal image magnification) can be reduced, which is an index showing a distortion of the image in a periphery of the lens. Accordingly, further easily viewable spectacle lens can be provided to a user.

Preferably, the first surface element includes the element by which the vertical surface power in a third coordinate of the principal sight line is smaller than the vertical surface power in a fourth coordinate of the principal sight line whose distance from the fitting point is larger than a distance between the third coordinate and the fitting point. The aspect ratio can be improved in the near vision part as well.

Preferably, in an intermediate region positioned between the far vision part and the near vision part, the first surface element further includes an element by which the vertical surface power in a fifth coordinate of the principal sight line is smaller than the vertical surface power in a sixth coordinate of the principal sight line whose distance from the fitting point is larger than a distance between the fifth coordinate and the fitting point. When an object side surface is designed, variation of the surface power caused by the first surface element, can be relatively reduced, and therefore an aspherical surface can be easily designed.

In the far vision part, preferably the first surface element includes an element by which the vertical surface power at an arbitrary point on a principal sight line whose distance from the fitting point is a prescribed value or less, is equal to the vertical surface power at the fitting point. This element is included in a region where a use frequency of the far vision part (use frequency in a far viewing) as a spectacle is relatively high. The variation of the surface power can be suppressed in the region where the use frequency is high. Therefore, a visual field in the far viewing can be made more stable.

Preferably, in the element by which the vertical surface power in the first coordinate is smaller than the vertical surface power in the second coordinate, a variation rate of the vertical surface power between the first coordinate and the second coordinate is 0.05D/mm or more. In the element by which the vertical surface power in the first coordinate is smaller than the vertical surface power in the second coordinate, preferably the variation rate of the vertical surface power between the first coordinate and the second coordinate is 0.07D/mm or more and 0.10D/mm or less. Wherein, D indicates dioptor. Improvement of the aspect ratio is relatively small when the ratio of increase of the vertical surface power is less than 0.05D/mm. By setting the ratio to 0.05D/mm or more, the aspect ratio can be more effectively improved. Further, if the ratio of the increase of the vertical power is larger than 0.10D/mm, the aspherical surface is hardly designed, and an edge thickness of the progressive power lens becomes easily large.

Brief description of the drawings

FIG. 1 is a perspective view showing an example of a spectacle.

FIG. 2A is a plan view schematically showing a progressive power lens, and FIG. 2B is a cross-sectional view of the progressive power lens.

FIG. 3A is a view showing a surface power on a principal sight line on an outer surface of a lens according to an embodiment of the present invention, and FIG. 3B is a view showing the surface power on the principal sight line on an inner surface of the lens according to an embodiment.

FIG. 4A is a view showing the surface power on the principal sight line on the outer surface of the lens according to a conventional example, and FIG. 4B is a view showing the surface power on the principal sight line on the inner surface of the lens according to a conventional example.

FIG. 5A is a view showing the surface power on the principal sight line on the outer surface of the lens according to a comparative example, and FIG. 5B is a view showing the surface power on the principal sight line on the inner surface of the lens according to a comparative example.

FIG. 6A is a view showing a surface astigmatic power distribution on the outer surface of the lens according to an embodiment, FIG. 6B is a view showing the surface astigmatic power distribution on the outer surface of the lens according to a conventional example, and FIG. 6C is a view showing the surface astigmatic power distribution on the outer surface of the lens according to a comparative example.

FIG. 7A is a view showing a spherical equivalent surface power distribution on the outer surface of the lens according to an embodiment, FIG. 7B is a view showing the spherical equivalent surface power distribution on the outer surface of the lens according to a conventional example, and FIG. 7C is a view showing the spherical equivalent surface power distribution on the outer surface of the lens according to a conventional example.

FIG. 8A is a view showing the surface astigmatic power distribution on the inner surface of the lens according to an embodiment, FIG. 8B is a view showing the surface astigmatic power distribution on the inner surface of the lens according to the conventional example, and FIG. 8C is a view showing the surface astigmatic power distribution on the inner surface of the lens according to a comparative example.

FIG. 9A is a view showing the spherical equivalent surface power distribution on the inner surface of the lens according to an embodiment, FIG. 9B is a view showing the spherical equivalent surface power distribution on the inner surface of the lens according to a conventional example, and FIG. 9C is a view showing the spherical equivalent surface power distribution on the inner surface of the lens according to a comparative example.

FIG. 10A is a view showing an astigmatic power distribution on the lens according to an embodiment, FIG. 10B is a view showing the astigmatic power distribution on the lens according to a conventional example, and FIG. 10C is a view showing the astigmatic power distribution on the lens according to a comparative example.

FIG. 11A is a view showing a spherical equivalent power distribution on the lens according to an embodiment, FIG. 11B is a view showing the spherical equivalent power distribution on the lens according to a conventional example, and FIG. 11C is a view showing the spherical equivalent power distribution on the lens according to a comparative example.

FIG. 12 is a view showing a deformation amount (swinging index IDs).

FIG. 13 is a view showing an image magnification.

FIG. 14 is a view showing an aspect ratio.

FIG. 15 is a flowchart showing a design of a lens and a process of manufacture.

FIG. 16 is a block diagram of a design device of the lens.

Detailed description of the Invention

Main terms used for the explanation of this embodiment will be described hereafter.

An "object side surface" of a lens means a surface opposed to an obj ect when a spectacle is worn by a wearer, and is also called an "outer surface" or a "convex surface".

An "eyeball side surface" of the lens means a surface opposed to an eyeball of the wearer when the spectacle is worn by the wearer, and is also called an "inner surface" or a "concave surface",

A "far vision part" of the lens means a visual field for viewing an obj ect in a far distance (for far viewing).

A "near vision part" of the lens means a visual field for viewing an obj ect in a near distance (for near viewing in which an average power (power) is different from that of the far vision part.

An "intermediate region" of the lens means a region connecting the far vision part and the near vision part so that the power is continuously varied, and is also called a portion for an intermediate viewing, an intermediate part, or a progressive part. A neighboring region along a principal sight line of the intermediate region is also called a progressive zone in some cases.

"The far vision part of the object side surface (eyeball side surface)" means the object side surface (eyeball side surface) corresponding to the far vision part of the lens.

"The near vision part of the object side surface (eyeball side surface) means the region of the object side surface (eyeball side surface) corresponding to the near vision part of the lens.

"An intermediate region of the object side surface (eyeball side surface)" means the region of the object side surface (eyeball side surface) corresponding to the intermediate region of the lens.

An "upper side" of the lens means a head top side of the wearer when the spectacle is worn by the wearer.

A "lower side" of the lens means a chin side of the wearer when the spectacle is worn by the wearer.

A "principal sight line" means a line connecting positions on the object side surface which are centers of a visual field at far viewing, intermediate viewing, and near viewing, and is also called a "principal meridian".

The "vertical direction" of the lens means a direction of the principal sight line in the far vision part. Note that the vertical direction may also be the direction orthogonal to the horizontal direction shown by a concealed mark (also called an alignment reference mark).

The "horizontal direction" means the direction orthogonal to the vertical direction. Generally, the concealed mark showing the horizontal direction is applied to the lens.

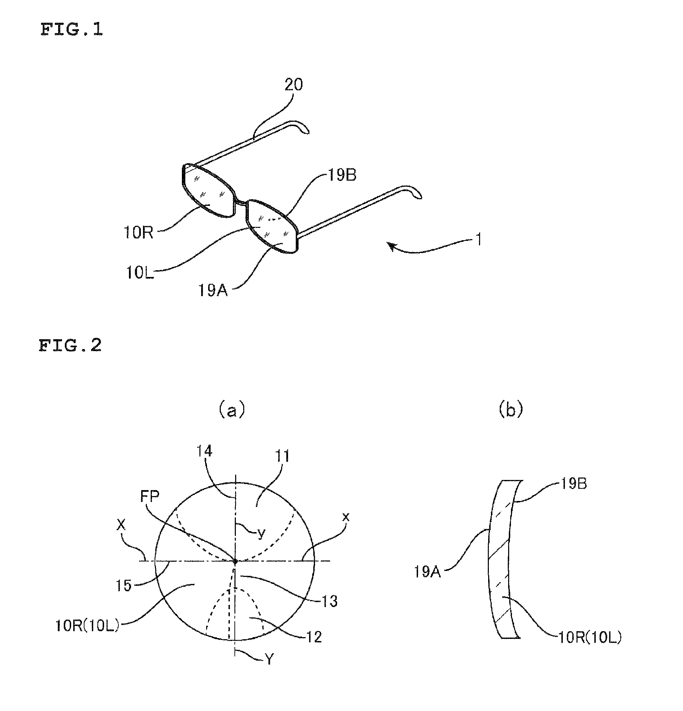

FIG. 1 is a perspective view showing an example of a spectacle. FIG. 2A is a plane view schematically showing a progressive power lens according to an embodiment of the present invention, and FIG. 2B is a cross-sectional view schematically showing the progressive power lens.

Explanation is given in this example, with a left side viewed from the user side (wearer side and eyeball side) as a left, and a right side viewed from the user side as a right. The spectacle 1 has right and left pair of spectacle lenses 10L and 10R for left eye and right eye, and a spectacle frame 20 into which the lens 10L and the lens 10R are respectively fitted. The lens 10L and the lens 10R are progressive power lenses. A basic shape of the lenses 10L and 10R is respectively a convex meniscus lens protruded toward the object side. Accordingly, the lenses 10L and 10R include an object side surface 19A and an eyeball side surface 19B respectively. The spectacle lenses 10R and 10L for right eye and left eye are called a lens 10 in common hereafter.

FIG. 2A shows the lens 10R for right eye. The lens 10R includes a far vision part 11 in an upper side, and includes a near vision part 12 in a lower side. Also, the lens 10R includes an intermediate region (intermediate part, progressive part, and progressive zone) 13. Also, the lens 10R includes a principal sight line 14. A fitting point FP being a reference point on a lens for making a visual line pass therethrough in a far-sighted horizontal front view (first ocular position) is positioned at a lower end of the far vision part 11 when an outer periphery of the lens 10R is molded and the molded lens 10R is put into a frame so as to fit into the frame. Hereafter, the fitting point FP is set as a coordinate original point of the lens, and a coordinate in a direction along a horizontal reference line 15 (a horizontal line passing through the fitting point FP, X-axis) is set as a x-coordinate, and a coordinate in a direction along the principal sight line 14 is set as a y-coordinate. The principal sight line 14 is extended approximately vertically to a direction of the near vision part 12 along the vertical reference line Y (vertical line passing through the fitting point FP) from the far vision part 11, and is bent to a nose side from the vicinity passing through the fitting point FP. A region adjacent to the far vision part 11 is an intermediate region 13, which is the region below the fitting point FP.

The lens 10R for right eye will be focused for explanation hereafter as a lens. However, the lens 10L for left eye can also be used for explanation as a lens, and in this case, the lens 10L for left eye can be basically constituted to have bilateral symmetry with the lens 10R for right eye excluding a difference in spectacle specification between right and left eyes.

Regarding an optical performance of the lens 10, a visual range can be known from an astigmatism distribution diagram and a spherical equivalent power distribution diagram. Swinging felt by a wearer when wearing the lens 10 and moving a head, is one of the performances of the lens 10, and there is sometimes a difference in the swinging even if the astigmatism distribution diagram and the spherical equivalent power distribution diagram are almost the same.

Japanese Patent Laid Open Publication No.2012-141221 discloses an evaluation of the swinging by the applicant of the present invention. In this evaluation method, first, rectangular patterns are provided so that a geometric center coincides with the fixation line through a spectacle lens, which is the rectangular patterns including a central vertical grid line and central upper and lower horizontal grid line passing through the geometric centers of these patterns. Next, a geometric deviation is obtained as swinging index IDd and IDs, which is the geometric deviation caused by an overlap of an image of the rectangular pattern viewed at the time of horizontally moving the spectacle lens at a specific horizontal angle together with a head portion in a range of not moving the visual line from the geometric center, and an image of the rectangular pattern before moving the spectacle lens. In this embodiment, the swinging is evaluated by a method of using the swinging index IDs showing the deviation by an area, out of the above-mentioned evaluation method.

1. Embodiment

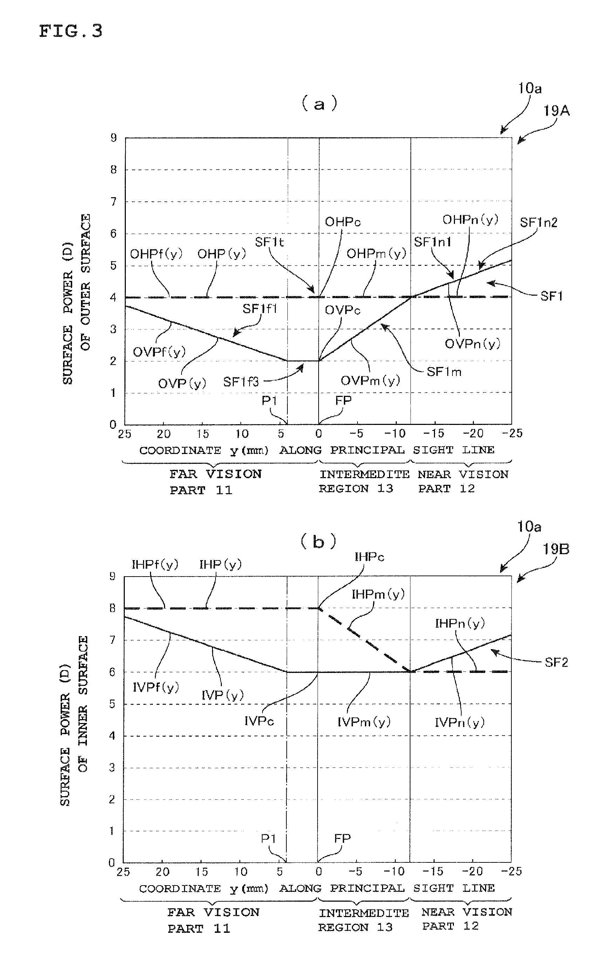

FIG. 3A and FIG. 3B show a vertical and horizontal surface power respectively along the principal sight line 14 of an outer surface 19A and an inner surface 19B of the lens 10a of the embodiment of the present invention. The lens 10a of embodiment 1 is called a both-side aspheric progressive lens, including an element of a progressive surface in the outer surface 19A and the inner surface 19B.

Specifically, FIG. 3A shows the horizontal surface power OHP (y) along the principal sight line 14 by broken line, and shows the vertical surface power OVP(y) by solid line, on the outer surface (object side surface) 19A of the lens 10a. Note that the unit of the power shown in the figure is diotor (D), and such a unit is common in each of the following figures unless particularly mentioned.

FIG. 3B shows the horizontal surface power IHP (y) along the principal sight line 14 by broken line, and shows the vertical surface power IVP(y) by solid line, on the inner surface (eyeball side surface) 19B of the lens 10a. The horizontal surface power IHP(y) of the inner surface 19B and the vertical surface power IVP(y) of the inner surface 19B are originally negative values. However, in this specification, both surface powers of the inner surface 19B are shown by absolute values. The same thing can be said in the following as well.

Further, the variation of the surface powers are simplified and shown in FIG. 3A and FIG. 3B for easily understanding a basic structure. In an actual design, correction of the astigmatism in a lens peripheral view or correction of an aspherical surface intended to improvement the thickness of the lens, are added. Accordingly, a slight variation of the surface power occurs horizontally and vertically in an upper part of the far vision part 11 and in the near vision part 12. This is common in each figure of the outer surface 19A and the inner surface 19B described below.

The lens 10a of the embodiment is the spectacle lens in which average power Sph is minus, namely the power of the far vision part 11 (power of a far vision measurement reference point) is minus. First surface element SF1 along the principal sight line 14 of the object side surface (outer surface) 19A includes an element (horizontal toric surface element) SF1t of a toric surface by which the horizontal surface power OHPc is larger than the vertical surface power OVPc at the fitting point FP. A complicated shape is formed as a whole in the outer surface 10A of the lens 10a because the aspherical surface element is included for designing the progressive surface. However, in the vicinity of the fitting point FP, the difference is constant between the vertical surface power OVPc and the horizontal surface power OHPc in the direction of the horizontal reference line 15. Note that the far vision measurement reference point is the point of the far vision part 11 previously selected by a lens designer. The lens 10a is designed so that the far vision measurement reference point satisfies a prescription average power of the far vision part 11. However, design or manufacture error may also be included in an allowable range as the spectacle. Further, the average power at a certain point is the average power in the vertical direction and in the horizontal direction at this point.

The lens 10a of the embodiment may also include the element of the atoric surface instead of the element SF1t of the toric surface. Here, the element of the toric surface is the element by which both major meridians are formed into spherical surface shapes unlike the surface power of orthogonal major meridians, and the element of the atoric surface is the element by which at least one of the major meridians is formed into an ashperical surface shape. The surface including the element of the toric surface is typically described hereafter.

In the far vision part 11, the first surface element SF1 further includes element SF1f1 by which the vertical surface power OVPf(y) is increased when separated from the fitting point FP along the principal sight line 14 that passes through the fitting point FP. Namely, the first surface element SF1 includes the element SF1t of the toric surface expressed by the following formula (1a), and the element SF1f1 of the far vision part 11 expressed by the following formulas (1b) and (1c).

$$OVPc < OHPc \qquad\qquad \ldots (1a)$$

$$OVPc \leq OVPf(y1) \qquad\qquad \ldots (1b)$$

$$OVPf(y1) < OVPf(y2) \qquad\qquad \ldots (1c)$$

Wherein, coordinates y1 (first coordinate) and y2 (second coordinate) are arbitrary coordinates in the far vision part 11 along the principal sight line 14, and are larger than the fitting point FP (in the upper part), and satisfy the following condition.

$$y1 < y2 \qquad \ldots (1d)$$

The first surface element SF1 of the lens 10a may further include element SF1n1 by which the vertical surface power OVPn(y) is increased when separated from the fitting point FP along the principal sight line 14 in the near vision part 12. The element SF1n1 in the near vision part 12 is expressed by the following formulas (2a) and (2b).

$$OVPc \leq OVPn(y3) \qquad\qquad \ldots (2a)$$

$$OVPn(y3) < OVPn(y4) \qquad\qquad \ldots (2b)$$

Wherein, coordinate y3 (third coordinate) and y4 (fourth coordinate) are arbitrary coordinates in the near vision part 12 along the principal sight line 14, and satisfy the following condition. Namely, coordinate y4 is the coordinate at a position (lower side) which is separated from the fitting point FP, with respect to the coordinate y3.

$$|y3| < |y4| \qquad \ldots (2c)$$

From the relation of formula (1a), formula (2a), and formula (2b), the element SF1n1 in the near vision part may include the element SF1n2 by which the vertical surface power OVPn(y) is larger than the horizontal surface power OHPn(y) in the near vision part 12. The element SF1n2 is expressed by the following formula (3a). In the lens 10a, a major portion of the near vision part 12 satisfies the condition of formula (3a).

$$OVPn(y) > OHPn(y) \qquad (3a)$$

Similarly, from the relation of formula (1a), formula (1b), and (1c), the element SF1f1 in the far vision part may include the element SF1f2 by which the vertical surface power OVPf(y) is larger than the horizontal surface power OHPf(y) in the far vision part 11. The element SF1f2 is expressed by the following formula (3b). However, the lens 10a of this example does not satisfy the condition of the formula (3b).

$$OVPf(y) > OHPf(y) \qquad \dots (3b)$$

Preferably, the first surface element SF1 includes element SF1m by which the vertical surface power OVPm(y) is increased toward the near vision part 12 from the fitting point FP along the principal sight line 14. The element SF1m of the intermediate region 13 is expressed by the following formulas (4a) and 4(b).

$$OVPc < OVPm(y5) \qquad \dots (4a)$$

$$OVPm(y5) < OVPm(y6) \qquad \dots (4b)$$

Wherein, coordinate y5 (fifth coordinate) and y6 (sixth coordinate) are arbitrary coordinates in the intermediate region 13 along the principal sight line 14, and satisfy the following condition. Namely, coordinate y6 is the coordinate at a position (lower side) separated from the fitting point FP, with respect to the coordinate y5.

$$|y5| < |y6| \qquad \dots (4c)$$

Further, preferably the first surface element SF1 includes a region (element of a far vision central region) SF1f3 by which the vertical surface power OVP (y) along the principal sight line is not varied in a range of a specific distance from the fitting point FP of the far vision part 11. Namely, in this range, preferably the vertical surface power OVP(y) is equal to the vertical surface power OVPc at the fitting point FP. The element SF1f3 in the far vision central region is expressed by the following formulas (5a) and (5b). Note that the range of "equal" in this case is not limited to a case of a complete coincidence, and includes a difference of the surface power generated by manufacture error, etc.

$$OVPc = OVPf(y7) \qquad \dots (5a)$$

Wherein, coordinate y7 is an arbitrary coordinate in the far vision part 11 along the principal sight line 14, and satisfies the following formula (5b).

$$0 \le y7 \le P1 \qquad \dots (5b)$$

Coordinate P1 is located at an upper end of the far vision central region, and is preferably 3 to 8mm, and further preferably 3 to 6mm.

An increase amount ΔOVP(y) in the element SF1f1 by which the vertical surface power OVPf(y) is increased in the near vision part 11 of the first surface element SF1, and in the element SF1n1 by which the vertical surface power OVPn(y) is increased in the near vision part 12 of the first surface element SF1, satisfies the following formula (6a).

$$|\Delta OVP(y)| \geq 0.05 \quad \ldots \quad (6a)$$

Wherein, ΔOVP(y) is a first-order differentiation (first-order partial differentiation of distance y), and the unit is D/mm. Further, D indicates dioptor.

The increase amount ΔOVP further satisfies the following condition (6b).

$$0.07 \leq |\Delta OVP(y)| \leq 0.10 \quad \ldots \quad (6b)$$

A specific increase amount ΔOVP(y) in the lens 10a is 0.09D/mm.

The outer surface 19A of the lens 10a is designed so as to include at least the element SF1t of the toric surface and the element SF1f1 of the far vision part 11, in the region along the principal sight line 14. Further, preferably the outer surface 19A is designed so as to satisfy the first surface element SF1 in a range within about ± 10mm in a horizontal direction with the principal sight line 14 as a center, although depending on a design condition of the progressive surface. This is because as a characteristic of a human vision when using the lens 10, use on the principal sight line 14 is extremely frequent and the swinging of the image is felt when performing a visual work using the vicinity of the principal sight line 14.

The surface power OHP(y) of the outer surface 19A of the lens 10a according to this embodiment is constant in the far vision part 11, the near vision part 12, and the intermediate region 13, thereby showing a flat graph shape. The horizontal surface power OHP (y) of the outer surface 19A may be varied based on a spectacle specification.

The vertical surface power IVP(y) of the inner surface (eyeball side surface) of the lens 10a is designed so as to include the second surface element SF2 by which the first surface element SF1 is canceled and the lens 10a satisfies the far vision power and addition defined by the spectacle specification. Further, the horizontal surface power IHP(y) of the inner surface 19B is designed so as to satisfy the spectacle specification. Accordingly, the first surface element SF1 and the second surface element SF2 include the element as the toric surface or the atoric surface, but don't include correction of an astigmatic power. The elements of the toric surface and the atoric surface for adjusting the astigmatic power can be added.

Accordingly, the first surface element SF1 and the second surface element SF2 satisfy the following formula (7).

$$IHP(y) - IVP(y) = OHP(y) - OVP(y) \quad \ldots \quad (7)$$

Wherein, this condition does not include an astigmatic prescription. Namely, this condition does not include the astigmatic prescription in the prescription for a far vision.

Note that formula (7) is a condition formula when the thickness of the lens is assumed to be thin. When the thickness of the lens is thick, calculation of the power in consideration of the thickness of the lens can be performed by a method described in patent document 1. However, in a thin lens with sufficiently small thickness of the lens, the element of the toric surface can be almost canceled by condition (7).

A specific specification of the lens 10a according to the embodiment is as follows. A lens base material with a refractive index of 1.67 is used, and a progressive zone length is 12mm, prescription power (far vision power, Sph) is -4.00D, and addition power (Add) is 2.00D. In addition, a diameter of the lens 10a is 65mm, and the astigmatic power is not included.

The horizontal surface power OHP(y) along the principal sight line 14 of the outer surface 19A of the lens 10a is constantly 4.0(D) in the far vision part 11 (OHPf(y)), the intermediate region 13 (OHPm(y)), and the near vision part 12 (OHPn(y)).

The vertical surface power OVP(y) along the principal sight line 14 of the outer surface 19A of the lens 10a is constantly 2.0(D) in the far vision part 11 (OVPf(y)) from the fitting point FP to the upper side point P1 (4mm), and the vertical surface power OVP(y) is monotonously increased in the upper side when separated from the fitting point FP, and is 3.74(D) at a point of y-coordinate (25mm) from the fitting point near the upper end of the far vision part 11. The surface power OVPm(y) of the intermediate region 13 is progressively increased from 2.0(D) when separated from the fitting point FP, and is 4.0(D) at the point of y-coordinate (-12mm) which is the upper end of the near vision part 12, to thereby obtain a specific addition power (2.0(D)). Note that the vertical surface power OVPm(y) and the horizontal surface power OHPm(y) are equal to each other on the upper end of the near vision part 12.

The surface power OVPn(y) of the near vision part 12 is monotonously increased from 2.0(D) at the point of y-coordinate (-12mm) when separated from the fitting point FP, and is 5.16(D) at the point of y-coordinate (-25mm) near the lower end of the near vision part 12. Accordingly, in the near vision part 12, the vertical surface power OVPn(y) is larger than the horizontal surface power OHPn(y).

Thus, in the outer surface 19A of the lens 10a, the vertical surface power OVP(y) is most largely different from the horizontal surface power OHP(y) at the fitting point FP, while the horizontal surface power OHP(y) is constant, and the vertical surface power OVP(y) is increased when separated from the fitting point FP excluding the central region for a far vision, and in the near vision part 12, the vertical surface power OVP(y) is larger than the horizontal surface power OHP(y).

The horizontal surface power IHP(y) along the principal sight line 14 on the inner surface 19B of the lens 10a is constantly 8.0(D) in the far vision part 11 (IHPf(y)), and is progressively decreased to 6.0(D) in the intermediate region 13 (IHPm(y)), to thereby obtain the addition power (2.0(D)), and is constantly 6.0(D) in the near vision part 12 (IHPn(y)).

The vertical surface power IVP(y) along the principal sight line 14 on the inner surface 19B of the lens 10a is 6.0(D) at the fitting point FP, and is constantly 6. 0 (D) in the central region for a far vision in the far vision part 11 (IVPf(y)) from the fitting point FP to the upper side point P1 (4mm), and thereafter is monotonously increased when separated from the fitting point FP, and is 7.74(D) at the point of y-coordinate (25mm), and is constantly 6.0(D) in the intermediate region 13 (IVPm(y)) in the lower side of the fitting point FP, and is monotonously increased in the near vision part 12 (IVPn(y)) when separated from the fitting point FP, and is 7.16(D) at y-coordinate (-25mm).

Thus, the vertical surface power IVP(y) is most largely different from the horizontal surface power IHP(y) at the fitting point FP while the horizontal surface power IHP(y) is constant in the intermediate region 13, excluding a case of being progressively varied in the intermediate region 13 to thereby obtain the specific addition power, and the vertical surface power IVP (y) is increased when separated from the fitting point FP excluding the central region for a far vision and the intermediate region 13, and in the near vision part 12, the vertical surface power IVP(y) is larger than the horizontal surface power IHP(y). Accordingly, the difference (element regarding the toric surface) between the horizontal surface power OHP(y) and the vertical surface power OVP(y) in the outer surface 19A, is canceled by the difference (element regarding the toric surface) between the horizontal surface power IHP(y) and the vertical surface power IVP(y) on the inner surface 19B, excluding a progressive variation.

2. Conventional example

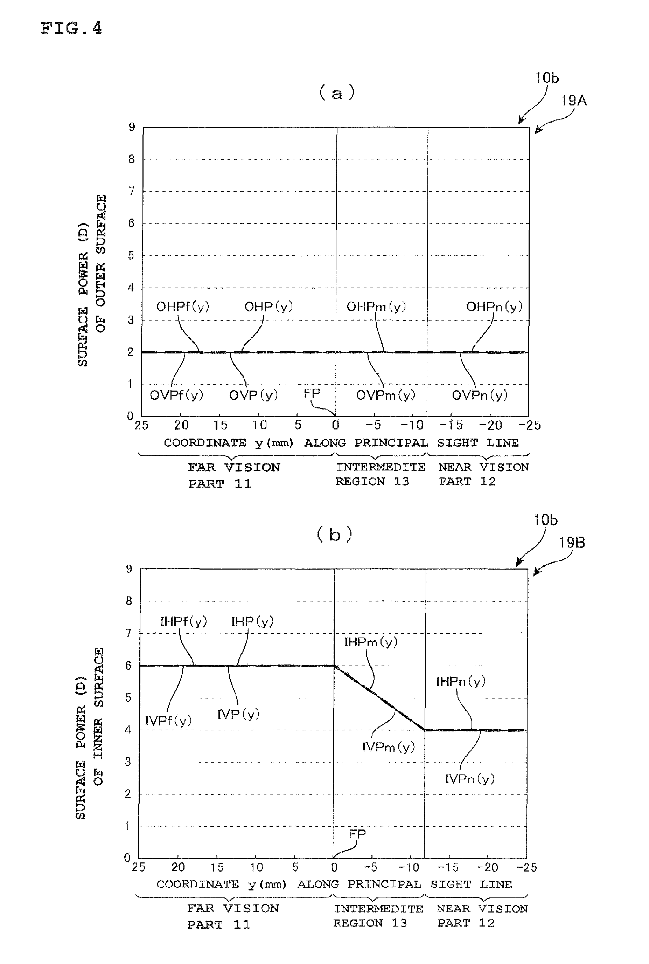

FIG. 4A and FIG. 4B are views of an inner surface progressive lens 10b of a conventional example designed based on the same specification as the spectacle specification of the lens 10a of the embodiment, and show the variation of the surface power along the principal sight lines 14 on the outer surface 19A and the inner surface 19B.

The outer surface 19A of the lens 10b of the conventional example is a spherical surface, and therefore the horizontal power OHP(y) of the outer surface 19A (far vision part 11 (OHPf(y)), the intermediate region 13 (OHPm(y)) and the near vision part 12 (including OHPn(y)), and the vertical surface power OVP(y) in the (far vision part 11(OVPf(y)), the intermediate region 13 (OVPm(y)) and the near vision part 12 (including OVPn(y)) are equally 2.0(D).

The inner surface 19B of the lens 10b is also the spherical surface microscopically in the principal sight line 14, namely is an umbilical shape, and the horizontal surface power IHPf(y) and the vertical surface power IVPf(y) of the far vision part 11 are equally 6.0(D), and in the intermediate region 13, the horizontal surface power IHPm(y) and the vertical surface power IVPm(y) are equally progressively varied to 4.0(D), to thereby obtain the specific addition power. Further, in the near vision part 12, the horizontal surface power IHPn(y) and IVPn(y) are equally 4.0(D).

3. Comparative example

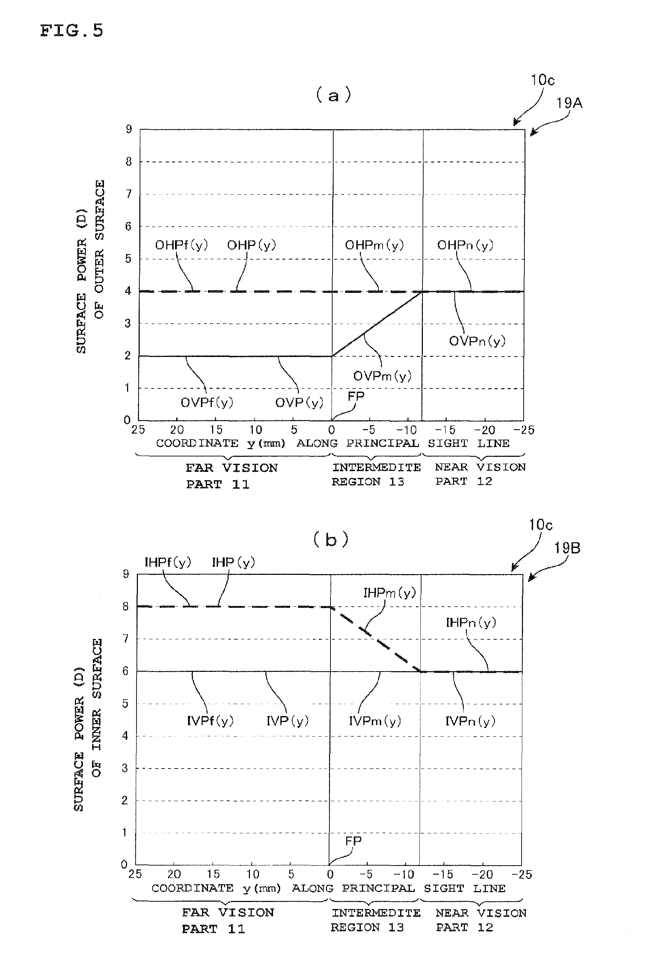

FIG. 5A and FIG. 5B are the views of an inner/outer surface progressive lens 10c of a horizontal toric surface according to a comparative example, which is designed based on the same specification as the spectacle specification of the lens 10a of the embodiment, and show the surface powers of the outer surface 19A and the inner surface 19B respectively. In this lens 10c, both the outer surface 19A and the inner surface 19B include a horizontal toric surface in which the horizontal surface power is larger than the vertical surface power in the far vision part 11 and the intermediate region 13, and the near vision part 12 includes a spherical surface in which the horizontal surface power and the vertical surface power are equal to each other.

Specifically, the horizontal surface power OHP(y) of the outer surface 19A of the lens 10c in the (far vision part 11 (OHPf(y)), the intermediate region 13 (OHPm(y)) and the near vision part 12 (including OHPn(y)) are constantly 4.0(D), and the vertical surface power OVP (y) is constantly 2. 0 (D) in the far vision part 11 (OVPf (y)), and is progressively increased to 4.0(D) in the intermediate region 13 (OVPm(y)) to thereby obtain the specific addition power, and is constantly 4.0(D) in the near vision part 12 (OVPn(y)).

In the inner surface 19B of the lens 10c, the horizontal surface power IHP (y) is constantly 8.0(D) in the far vision part 11 (IHPf(y)), and is progressively decreased to 6.0(D) in the intermediate region 13 (IHPm(y)) to thereby obtain the specific addition power, and constantly 6.0(D) in the near vision part 12 (IHPn(y)). The vertical surface power IVP(y) is constantly 6.0(D) in the far vision part 11 (IVPf(y)), the intermediate region 13 (IVPm(y)) and the near vision part 12 (including IVPn(y)).

Accordingly, in the lens 10c of the comparative example, the outer surface 19A of the far vision part 11 and the intermediate region 13 include the element of the toric surface, and the inner surface 19B includes the element of the toric surface that cancels the element of the toric surface of the outer surface 19A.

4. Evaluation

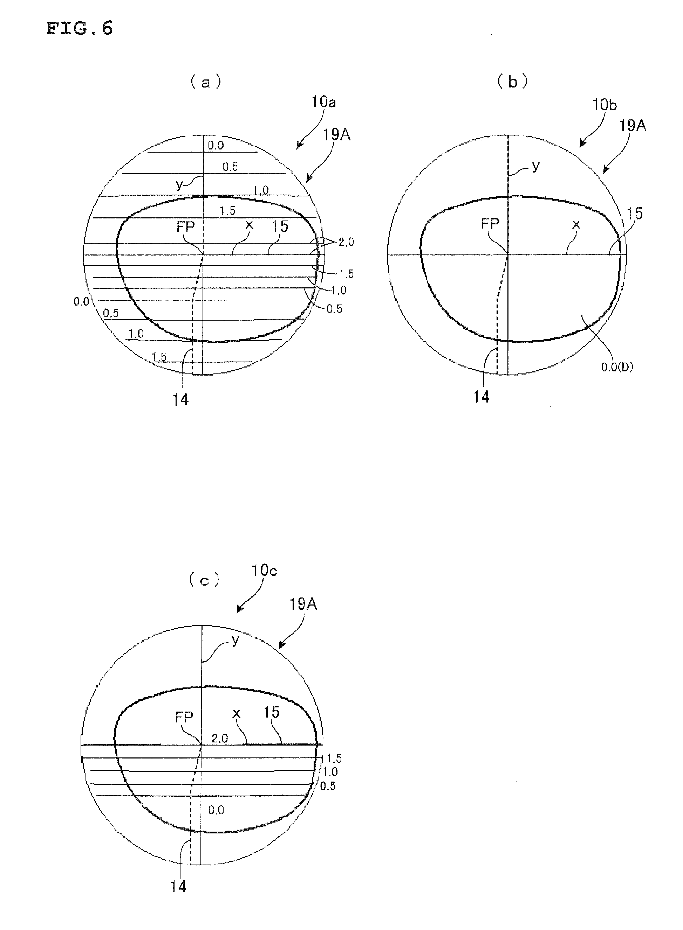

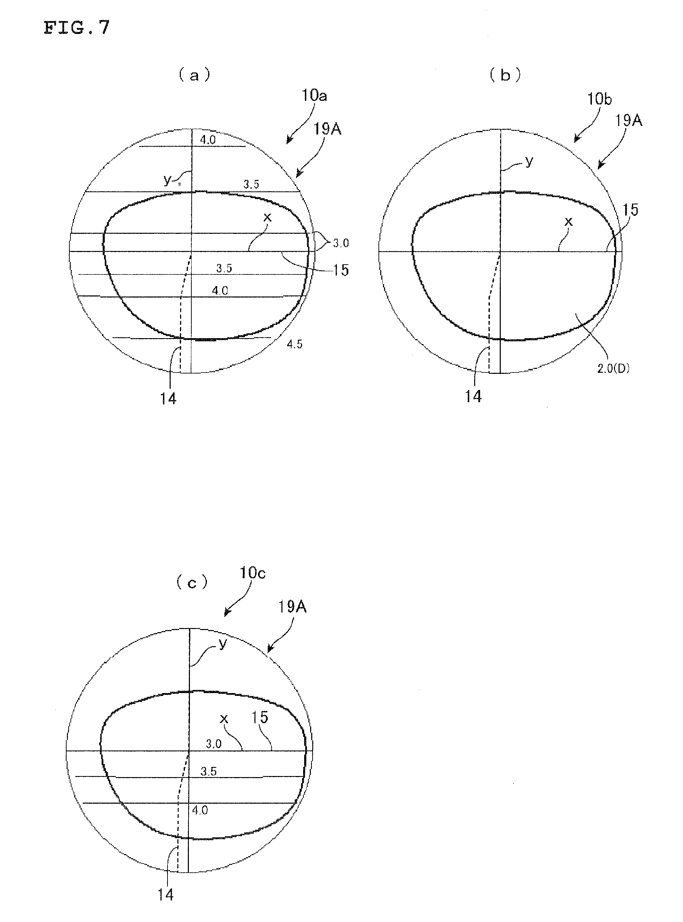

FIG. 6A to FIG. 6C show the surface astigmatic power distribution on the outer surface 19A of the lenses 10a to 10c of the embodiment, the conventional example, and the comparative example respectively, and FIG. 7A to FIG. 7C show the equivalent surface power distribution on the outer surface 19A of the lenses 10a to 10c of the embodiment, the conventional example, and the comparative example respectively. Equivalent spherical surface power ESP is obtained by the following formula.

$$ESP = (OHP + OVP)/2 \quad ... \quad (8)$$

Wherein, the horizontal surface power OVP at the arbitrary point on the object side surface (outer surface) 10A, is the vertical surface power at the object side surface (outer surface) 19A.

Note that the unit shown in each figure is diotor (D), and vertical and horizontal straight lines in the figure show the reference line (vertical reference line Y and horizontal reference line X) passing through a geometric center of a circular lens, and an image of the shape at the time of framing the lens into the spectacle frame, with the geometric center being an intersection point of the vertical reference line Y and the horizontal reference line X) as the fitting point FP, is shown by a thick solid line. Further, the principal sight line 14 is shown by a broken line. The same thing can be said for the view shown below.

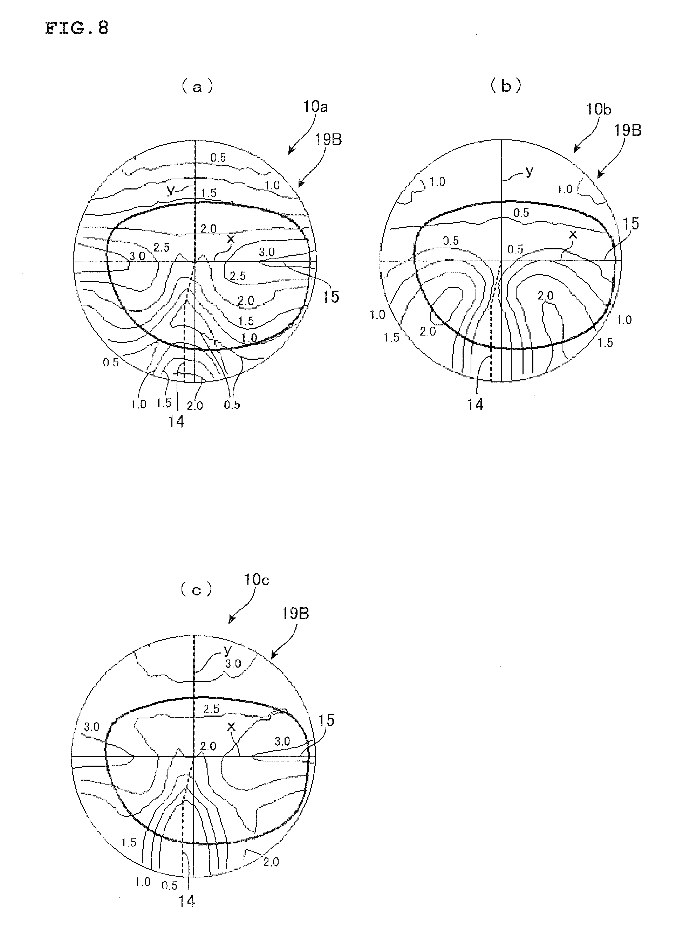

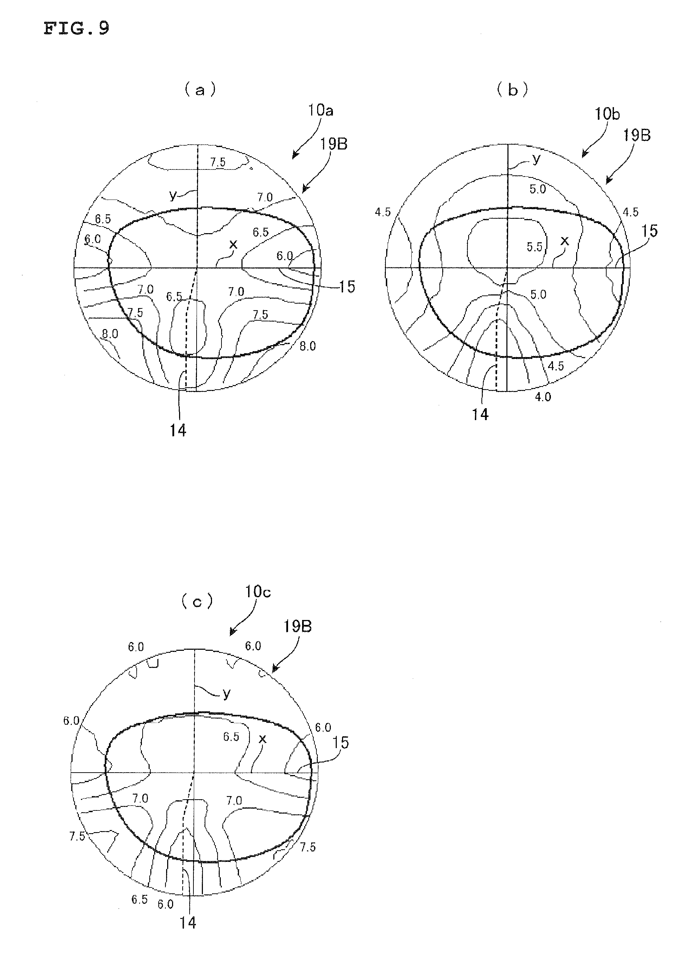

FIG. 8A to FIG. 8C show the surface astigmatic power distribution on the inner surface 19B of the lenses 10a to 10c of the embodiment, the conventional example, and the comparative example respectively, and FIG. 9A to FIG. 9C show the equivalent spherical surface power distribution on the inner surface 19B of the lenses 10a to 10c of the embodiment, the conventional example, and the comparative example respectively.

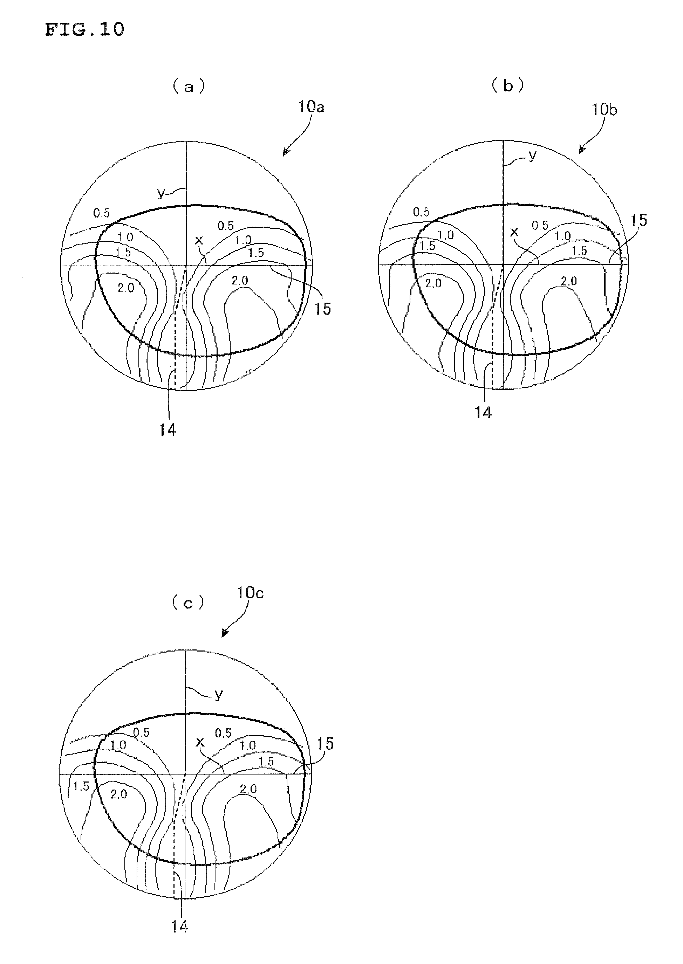

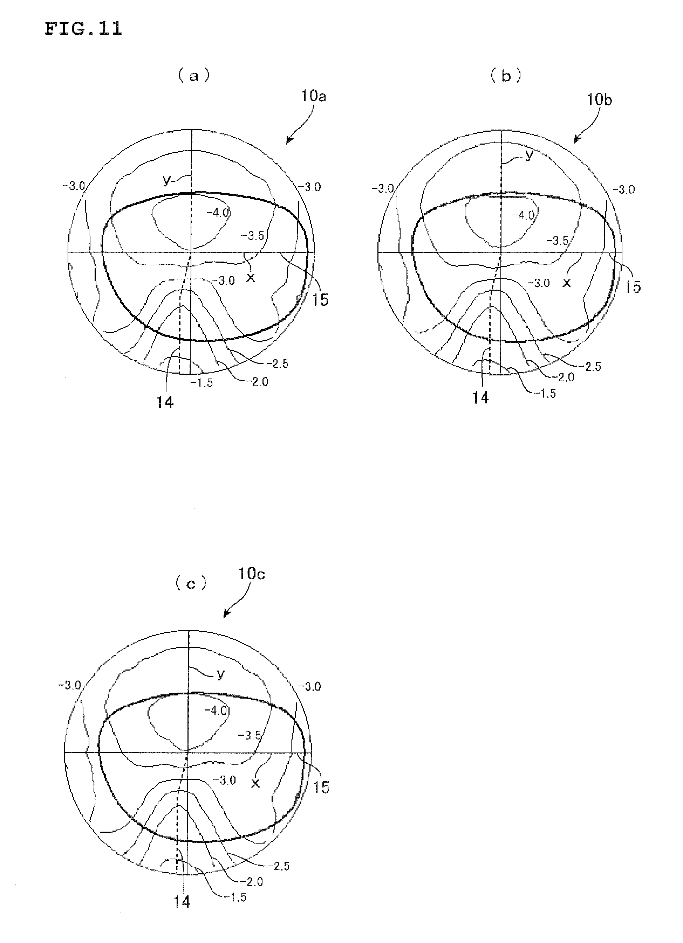

FIG. 10A to FIG. 10C show the astigmatic power distribution when observed through each position on the lenses 10a to 10c of the embodiment, the conventional example, and the comparative example respectively, and FIG. 11A to FIG. 11C show the equivalent spherical surface power distribution when observed through each position on the lenses 10a to 10c of the embodiment, the conventional example, and the comparative example respectively.

As shown in these figures, the first surface element SF1 causes surface astigmatism and a variation of the equivalent spherical surface power to be generated on the outer surface 19A of the lens 10a of the embodiment. In the lens 10c of the comparative example as well, the element of the toric surface causes the surface astigmatism and the variation of the equivalent spherical surface power to be generated. Regarding the lens 10b of the conventional example, the outer surface 19A is the spherical surface, and therefore the surface astigmatism is 0.0(D) in the whole area. Further, a constant surface astigmatism is generated at a value of 2.0(D) in the far vision part 11 on the outer surface 19A of the lens 10c of the comparative example.

Aspherical surface correction is applied to the inner surface 19B of the lens 10a of the embodiment in addition to the second surface element SF2 in actual design, for correcting astigmatism in a lens peripheral view and performing correction to the thickness of the lens. Accordingly the surface astigmatism and the equivalent spherical surface power to be generated on the inner surface 10B of the lens 10a. The same thing can be said for the lens 10c of the comparative example and the lens 10b of the conventional example.

In the lens 10a of the embodiment, the lens 10c of the comparative example, and the lens 10b of the conventional example, the astigmatism distribution and the equivalent spherical surface power distribution are almost the same when observed through the lens, and it is found that these lenses can realize almost the same performance in the astigmatism distribution and the equivalent spherical surface power distribution.

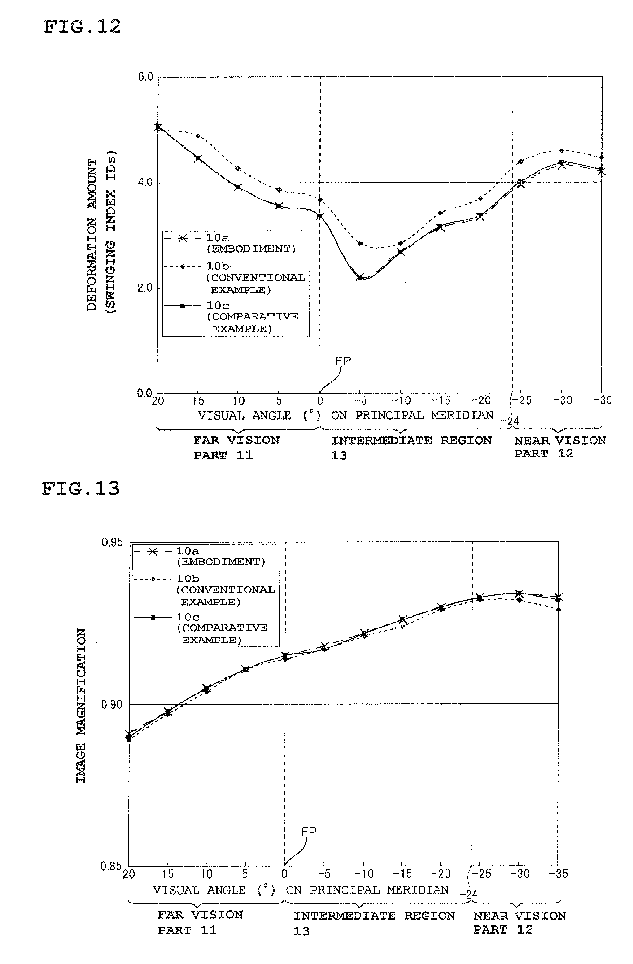

FIG. 12 shows a result obtained by evaluating the swinging of the image viewed through the lenses 10a to 10c of embodiment 1, conventional example 1, and comparative example 1 by a method of evaluating the swinging by viewing a rectangular pattern (specifically see Japanese Patent Laid Open Publication No.2012-141221). An evaluation index of the swinging of the image is indicated by index IDs regarding a deformation amount. The pitch of the rectangular pattern during evaluation is ±10 degrees with respect to a main fixation point, and a deflection of the head portion is set in right and left directions, and the deflection angle is set to 10 degrees in the right and left directions.

In FIG. 12, "total L" showing total or average of a fluctuation area of grid lines of all grids to be observed is indicated by index IDs, and the index IDs is obtained at several visual angles along the principal meridian (principal sight line) 14 of each of the lenses 10a to 10c. The index IDs indicates the deformation amount by percentage (%).

In FIG. 12, the fitting point FP of each of the lenses 10a to 10c is the intersection point of a visual line of a wearer and the outer surface 19a in a horizontal front view at a visual angle of 0 degree, namely in a primary eye position. The far vision part 11 is in a range extending to the upper side from the fitting point FP by 20 degrees, and the intermediate region 13 is in a range extending to the lower side from the fitting point FP by -24 degrees, and the lower side therefrom is the near vision part 12.

As shown in FIG. 12, in the lens 10a of the embodiment and the lens 10c of the comparative example, the index IDs is considerably smaller than the index IDs of the lens 10b of the comparative example over approximately all of the far, intermediate, near regions on the principal sight line 14. Further, in the lens 10a of the embodiment, the index IDs is smaller than the index IDs of the lens 10c of the comparative example in the region from the lower side of the intermediate region 13 to the near vision part 12. Accordingly, it is found that the swinging of the image can be reduced by viewing through the lens 10a of the embodiment. Particularly, the effect of reducing the swinging is great in the region from the lower side of the intermediate region 13 to the near vision part 12.

In the lens 10a of the embodiment and the lens 10c of the comparative example, the swinging of the image can be considerably reduced compared to the lens 10b of the conventional example. Accordingly, it is found to be effective for suppressing the swinging of the image, to include the first surface element SF1 in the design of the outer surface 19A, including the element common in the embodiment and the comparative example, namely, the element SF1t of the toric surface or the atoric surface by which the horizontal surface power OHP(y) is larger than the vertical surface power OVP(y) in the far vision part 11 and the intermediate region 13. On the horizontal toric surface or atoric surface, displacement of an angle formed by the visual line and the outer surface 19A can be suppressed for a movement of the visual line when viewing an object through the lens, and if the displacement formed by the visual line and the outer surface 19A is small, generation of various aberrations such as field curvature is suppressed, and this is effective for reducing the swinging of the image viewed through the lens.

Further, when the swinging of the image is compared between the lens 10a of the embodiment and the lens 10c of the comparative example, the effect of reducing the swinging of the image in the near vision part 12 is larger in the lens 10a of the embodiment. Accordingly, it is also found to be effective to include the element of providing the toric surface or the atoric surface on the outer surface 19A in the near vision part 12 for reducing the swinging of the image. Particularly, in the lens 10a of this embodiment, in the near vision part 12, the first surface element SF1 includes the element SF1n1 by which the vertical surface power OVPn(y) is increased along the principal sight line 14, and the element SF1n2 by which the vertical surface power OVPn(y) is larger than the horizontal surface power OHPn(y). An aspect ratio is improved as described later by these elements SF1n1 and SF1n2, which probably effectively works for reducing the swinging of the image in the near vision part 12. In the near vision part 12, there is possibly the effect of reducing the swinging of the image by suppressing the displacement of the angle for the movement of a vertical visual line rather than the movement of a horizontal visual line.

Further, as described later, in a case of a minus degree in the near vision part 12, rapid decrease of an image magnification in the vertical direction can be suppressed and the variation of the aspect ratio of the image can be suppressed by increasing the vertical surface power OVPn(y) along the principal sight line 14 by the element SF1n1. Particularly, by setting the vertical surface power OVPn(y) to be larger than the horizontal surface power OHPn(y) by the element SF1n2, the variation of the aspect ratio of the image can be suppressed and such an effect contributes to reducing the swinging of the image.

FIG. 13 shows a result of the image magnification on the principal meridian 14 of the lenses 10a to 10c according to the embodiment, the conventional example, and the comparative example, by ray-tracing.

The image magnification of the lens 10a of the embodiment and the lens 10c of the comparative example is respectively larger than the image magnification of the lens 10b of the conventional example over almost all regions of the far vision part 11, the intermediate region 13, and the near vision part 12 on the principal sight line 14, and is largely improved particularly in the near vision part 12. Accordingly, it is found to be effective to include the element common in the lens 10a of the embodiment and the lens 10c of the comparative example, namely the element SF1t of providing the toric surface or the atoric surface in the first surface element SF1, from the point of securing the image magnification.

Further, in the lens 10a of the embodiment, it is effective to obtain a higher image magnification than the image magnification of the lens 10c of the comparative example over the whole range, and particularly it is effective to secure the image magnification in the near vision part 12. The lens 10a of this embodiment is the lens with minus power of -2D for a near vision, and therefore by setting the image magnification to be close to 1 in the near vision part 12, reduction of the image is suppressed, and fine writing or fine manual work can be easily performed.

One of the factors of securing further high image magnification in the lens 10c of the comparative example, is considered to be the element SF1n1 by which the vertical surface power OVPn(y) is gradually increased toward outside in the near vision part 12, and the element SF1f1 by which the vertical surface power OVPf(y) is gradually increased toward outside in the far vision part 11. Accordingly, it is effective to design the outer surface 19A of the lens so as to include the first surface element SF1 including these elements SF1n1 and SF1f1.

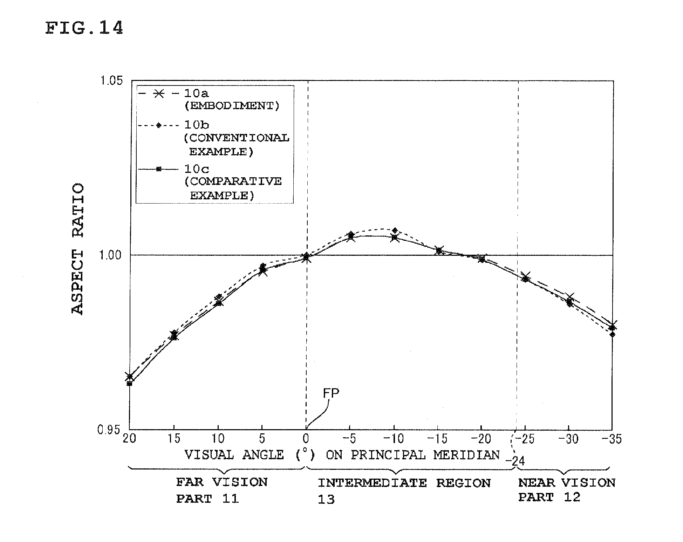

FIG. 14 shows the result of the aspect ratio in each region on the principal meridian 14 of the lenses 10a to 10c of the embodiment, the conventional example, and the comparative example, by ray-tracing. In this specification, the aspect ratio is defined as a ratio of the vertical magnification with respect to the horizontal magnification.

The aspect ratio of the image obtained by the lens 10c of the comparative example shows a value closer to 1 than the lens 10b of the conventional example, which is an ideal value. However, in the far vision part 11, the aspect ratio of the image obtained by the lens 10c of the comparative example becomes smaller than the lens 10b of the conventional example. Further, in the near vision part 12, the aspect ratio of the image obtained by the lens 10c of the comparative example is almost the same as the lens 10b of the conventional example, and is rapidly decreased toward the periphery of the lens.

The aspect ratio of the image obtained by the lens 10a of the embodiment is not different from the aspect ratio of the image obtained by the lens 10c of the comparative example, and is closer to 1 than the lens 10b of the conventional example. In the far vision part 11, the aspect ratio of the image obtained by the lens 10a of the embodiment is larger than the aspect ratio of the image obtained by the lens 10c of the comparative example, and is close to the aspect ratio of the image obtained by the lens 10b of the conventional example, or is the value further closer to 1. Further, in the near vision part 12, the aspect ratio of the image obtained by the lens 10a of the embodiment is closer to 1 than the aspect ratio of the image obtained by the lens 10c of the comparative example and the lens 10b of the conventional example, and rapid decrease of the aspect ratio toward the periphery of the lens can be suppressed.

Accordingly, in the lens 10a of the embodiment, an image with the aspect ratio further closer to 1 can be obtained in the periphery of the far vision part 11 in which the aspect ratio has an influence on a vision. The same thing can be said for the near vision part 12. Accordingly, the lens 10a of the embodiment can suppress a rapid variation of the aspect ratio in the periphery of the lens, and the image with reduced distortion can be obtained, the distortion being caused by the variation of the aspect ratio. Therefore, further natural image can be obtained by viewing the image through the lens 10a of the embodiment.

As a factor of improving the aspect ratio in the upper part of the far vision part 11 positioned in the periphery of the lens in the lens 10a of the embodiment, the element SF1f1 can be considered, by which the vertical surface power OVP(y) along the principal sight line 14 is increased when separated from the fitting point FP. This is because increase of a prism effect can be suppressed by the element SF1f1 in the peripheral part of the lens 10a. Further, an improvement of the vertical image magnification by the effect of a shape factor of increasing the vertical surface power OCP(y) by the element SF1f1, has a favorable influence on an improvement of the aspect ratio.

Similarly, as a factor of improving the aspect ratio in the near vision part 12, the element SF1n1 can be considered, by which the vertical surface power OVP(y) along the principal sight line 14 is increased when separated from the fitting point FP on the outer surface 19A. Accordingly, it is useful in manufacture of the spectacle lens, to design the outer surface 19A of the lens 10 so as to include the first surface element SF1 including these elements SF1f1 and SF1n1.

Generally, in the lens of minus prescription, the prism effect is increased toward the periphery the lens in an accelerating manner, and the aspect ratio (ratio of the vertical image magnification to the horizontal image magnification) which is an index showing the distortion of the image, is rapidly decreased from 1 which is an ideal value. This is because the vertical image magnification is rapidly decreased compared with the horizontal image magnification. Particularly, when in a case of the lens in which the horizontal surface power is larger than the vertical surface power, the above phenomenon easily occurs.

In the lens 10 of the present invention, by introducing the element SF1f1 by which the vertical surface power OVP(y) is increased when separated from the fitting point FP on the object side surface 19A, the difference becomes small between the horizontal surface power OHP(y) and the vertical surface power OVP(y) under influence of the element SF1t of the toric surface or the atorice surface, which is the element for reducing the swinging of the image. Therefore, decrease of the aspect ratio in a region separated from the fitting point FP in the far vision part 11 can be suppressed, and a sharp image with small distortion and the image with less swinging can be obtained.

Further, since the near vision part 12 is positioned in the peripheral part of the lens 10, the decrease of the aspect ratio easily occurs. However, by introducing the element SF1n1 by which the vertical surface power OVP(y) is increased, the vertical surface power OVP(y) is increased, and by making the vertical surface power OVP(y) larger than the horizontal surface power OHP(y), rapid decrease of the aspect ratio can be suppressed. In the spectacle lens for near vision with a prescription power of minus, there is a great merit for a user in the point that the aspect ratio in the near vision part 12 is maintained and the image magnification is improved, and the lens 10 with suppressed swinging of the image and improved performance is suitable as the lens for a spectacle.

Thus, it is found that the progressive power lens for a spectacle capable of suppressing the swinging of the image by introducing the first surface element SF1 including each element described above on the outer surface 19A of the lens 10, and introducing the second surface element SF2 on the inner surface 10B for canceling the first surface element of the outer surface 19A, with high image magnification and less variation of the aspect ratio, can be provided. Accordingly, the spectacle lens with improved view and the spectacle using this lens can be provided.

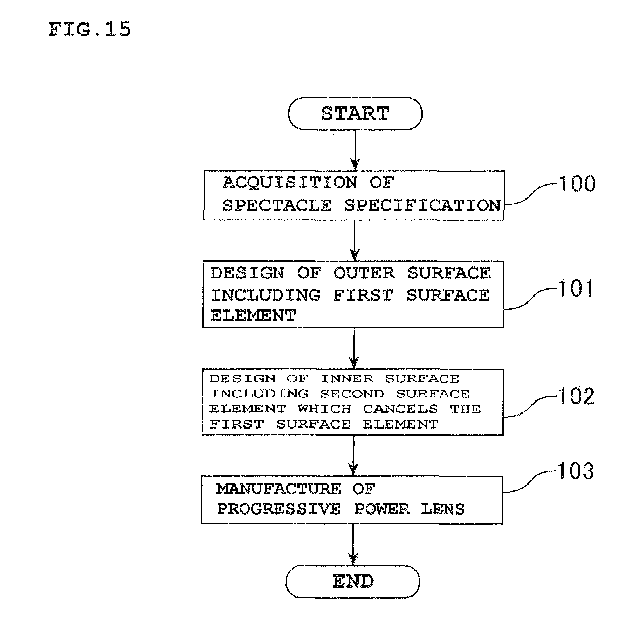

FIG. 15 shows an outline of a process of design and manufacture of the above-mentioned progressive power lens for a spectacle. In step 100, when a spectacle specification for the user is obtained, the outer surface (object side surface) 19A including the above-mentioned first surface element SF1 is designed.

Next, in step 102, the inner surface (eyeball side surface) 19B including the second surface element SF2 satisfying the formula (7) is designed. The second surface element SF2 cancels a shift of the surface power formed on the outer surface 19A by the first surface element SF1. Further, in step 103, the lens 19 designed by the above step is manufactured.

This design method can be recorded and provided in suitable media such as a memory and ROM as a computer program (program product) for executing the above-mentioned processing 100 to 102 by a computer including a suitable hardware resource such as CPU and memory. The design method may also be provided through a network.

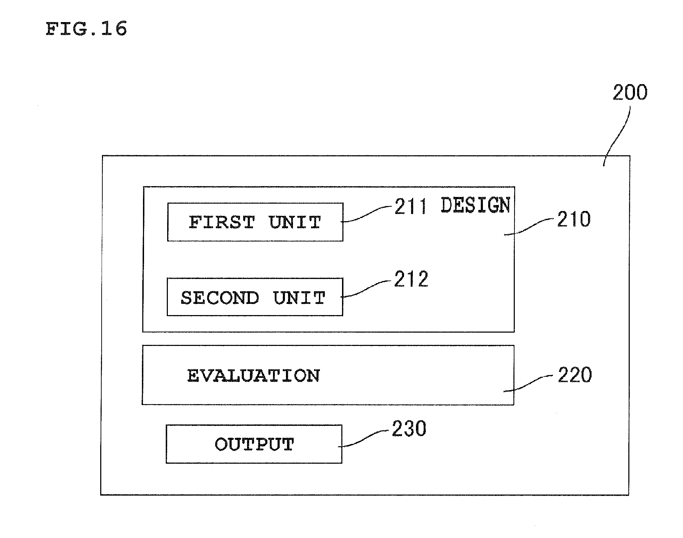

FIG. 16 shows an embodiment of a design device of the lens 10. This design device 200 includes a design unit 210 for designing the lens 10 based on the spectacle specification; an evaluation unit 220 for obtaining and evaluating the swinging index IDs, the image magnification, and the aspect ratio of the designed lens 10; and an output unit 230 for outputting the swinging index IDs the image magnification, and the aspect ratio obtained by the evaluation unit 220 in an easily viewable state for the user (wearer), for example, by graphically showing them. Owing to the output unit 230, the user can select the lens 10 with less swinging on his/her own judgment.

The design unit 210 includes a first unit 211 for designing the object side surface (outer surface) 19A and a second unit 212 for designing the eyeball surface (inner surface) 19B. The first unit 211 has a function of performing the above-mentioned processing of step 101 of the design method, and the second unit 212 has a function of performing the above-mentioned processing of step 102 of the design method. As an embodiment of the design device 200, a personal computer can be given, which includes resources such as a memory and a display, and the design device 200 including the above-mentioned functions can be realized by downloading and executing the program for causing the personal computer to be functioned as the design device 200.

The above explanation is given for a case that there is no astigmatic prescription in the prescription for a far vision. However, when there is the astigmatic prescription, the astigmatic prescription can be included on the inner surface side by synthesizing the toric surface (toroidal surface) component for correcting the astigmatism. Further, in a case of a thick lens, the lens with better precision can be provided by correcting the inner surface side in consideration of the shape factor. In the first surface element the additional power may be introduced by the horizontal surface power or may be introduced by the horizontal and vertical surface power in the intermediate region. In the central region for a far vision, preferably the horizontal surface power is not varied.

Further, the object side surface of the lens 10a of the embodiment shows an example of employing a circular namely the toric surface in the cross-sectional shape which is orthogonal to the principal sight line. However, as described above, the atoric surface may also be employed, in which a horizontal curvature is decreased or increased with respect to a vertical curvature in the peripheral part separated from the principal sight line. Particularly, including of the element of the atoric surface by which the horizontal curvature is decreased when separated from the principal sight line, is effective for realizing a thin lens in the periphery of the lens.

**Claims**

1. A progressive power lens comprising:

   a far vision part; and
   a near vision part;
   wherein an average power of a far vision measurement reference point is minus,
   the progressive power lens further comprising:

   an object side surface including a first surface element; and
   an eyeball side surface including a second surface element which cancels the first surface element,

   the first surface element comprising:

   an element of a toric surface or an element of an atoric surface by which a horizontal surface power is larger than a vertical surface power at a fitting point positioned at a lower end of the far vision part; and
   in the far vision part, an element by which the vertical surface power in a first coordinate of a principal sight line passing through the fitting point, is smaller than the vertical surface power in a second coordinate of the principal sight line whose distance from the fitting point is larger than a distance between the first coordinate and the fitting point.

2. The progressive power lens according to claim 1, wherein in the near vision part, the first surface element includes the element by which the vertical surface power in a third coordinate of the principal sight line is smaller than the vertical surface power in a fourth coordinate of the principal sight line whose distance from the fitting point is larger than a distance between the third coordinate and the fitting point.

3. The progressive power lens according to claim 1 or 2, wherein in an intermediate region positioned between the far vision part and the near vision part, the first surface element further includes an element by which the vertical surface power in a fifth coordinate of the principal sight line is smaller than the vertical surface power in a sixth coordinate of the principal sight line whose distance from the fitting point is larger than a distance between the fifth coordinate and the fitting point.

4. The progressive power lens according to any one of claims 1 to 3, wherein in the far vision part, the first surface element includes an element by which the vertical surface power at an arbitrary point on the principal sight line whose distance from the fitting point is a prescribed value or less, is equal to the vertical surface power at the fitting point.

5. The progressive power lens according to any one of claims 1 to 4, wherein in the element by which the vertical surface power in the first coordinate is smaller than the vertical surface power in the second coordinate, a variation rate of the vertical surface power between the first coordinate and the second coordinate is 0.05D/mm or more, wherein D indicates diotor.

6. The progressive power lens according to any one of claims 1 to 5, wherein in the element by which the vertical surface power in the first coordinate is smaller than the vertical surface power in the second coordinate, the variation rate of the vertical surface power between the first coordinate and the second coordinate is 0.07D/mm or more and 0.10D/mm or less.

FIG.1

20

19B

10R

10L

19A

1

FIG.2

(a)

(b)

14    11

FP

X    x

y

15

13

10R(10L)

12

Y

19B

19A

10R(10L)

FIG.3

(a)

(b)

FIG.4

(a)

SURFACE POWER (D) OF OUTER SURFACE

OHPf(y)  OHP(y)  OHPm(y)  OHPn(y)

OVPf(y)  OVP(y)  FP  OVPm(y)  OVPn(y)

COORDINATE y(mm) ALONG PRINCIPAL SIGHT LINE

FAR VISION PART 11 — INTERMEDITE REGION 13 — NEAR VISION PART 12

(b)

SURFACE POWER (D) OF INNER SURFACE

IHPf(y)  IHP(y)  IHPm(y)  IHPn(y)

IVPf(y)  IVP(y)  IVPm(y)  IVPn(y)

FP

COORDINATE y(mm) ALONG PRINCIPAL SIGHT LINE

FAR VISION PART 11 — INTERMEDITE REGION 13 — NEAR VISION PART 12

17

FIG.5

(a)

(b)

FIG.6

(a)

(b)

(c)

FIG.7

(a)

(b)

(c)

FIG.8

（a）

（b）

（c）

FIG.9

(a)

(b)

(c)

FIG.10

FIG.11

(a)

(b)

(c)

FIG.12

DEFORMATION AMOUNT (SWINGING INDEX IDs)

— ✳ — 10a (EMBODIMENT)
— ◆ — 10b (CONVENTIONAL EXAMPLE)
— ■ — 10c (COMPARATIVE EXAMPLE)

FP

VISUAL ANGLE (°) ON PRINCIPAL MERIDIAN

FAR VISION PART 11 | INTERMEDIATE REGION 13 | NEAR VISION PART 12

FIG.13

IMAGE MAGNIFICATION

— ✳ — 10a (EMBODIMENT)
— ◆ — 10b (CONVENTIONAL EXAMPLE)
— ■ — 10c (COMPARATIVE EXAMPLE)

FP

VISUAL ANGLE (°) ON PRINCIPAL MERIDIAN

FAR VISION PART 11 | INTERMEDIATE REGION 13 | NEAR VISION PART 12

FIG.14

FIG.15

```
                    ┌─────────────┐
                    │    START    │
                    └──────┬──────┘
                           │
                           ▼
        ┌──────────────────────────────┐
        │      ACQUISITION OF          │ ─── 100
        │   SPECTACLE SPECIFICATION    │
        └──────────────┬───────────────┘
                       │
                       ▼
        ┌──────────────────────────────┐
        │  DESIGN OF OUTER SURFACE     │
        │  INCLUDING FIRST SURFACE     │ ─── 101
        │  ELEMENT                     │
        └──────────────┬───────────────┘
                       │
                       ▼
        ┌──────────────────────────────┐
        │  DESIGN OF INNER SURFACE     │
        │  INCLUDING SECOND SURFACE    │
        │  ELEMENT WHICH CANCELS THE   │ ─── 102
        │  FIRST SURFACE ELEMENT       │
        └──────────────┬───────────────┘
                       │
                       ▼
        ┌──────────────────────────────┐
        │     MANUFACTURE OF           │ ─── 103
        │  PROGRESSIVE POWER LENS      │
        └──────────────┬───────────────┘
                       │
                       ▼
                ┌─────────────┐
                │     END     │
                └─────────────┘
```

FIG.16

**REFERENCES CITED IN THE DESCRIPTION**

**Patent documents cited in the description**

- JP 2012173595 A
- JP 2012141221 A